# EUROPEAN PATENT APPLICATION

(11) **EP 3 502 654 A1**
(43) Date of publication of application: **26.06.2019**
(21) Application number: 17210514.0
(22) Date of filing: 22.12.2017
(51) Int. Cl.: G01N 1/42, G01N 1/28, G01N 35/10, B05B 5/00

(54) **METHOD FOR APPLYING LIQUIDS TO A SUBSTRATE**

(71) Applicant: Universiteit Maastricht, 6211 LK Maastricht (NL)
(72) Inventor: RAVELLI, Raimond, 6221 BW Maastricht (NL); NIJPELS, Franciscus Johannes Theresia, 3620 Veldwezelt (BE)
(74) Representative: De Vries & Metman

(57) **Abstract**

The invention relates to a method of applying at least one sample, e.g. for imaging or diffraction experiments under cryogenic conditions, to a substrate (1), in particular a sample carrier, such as a film on a grid, comprising the steps of applying, in one or more steps, a liquid to the substrate (1) thus forming a liquid layer (5) on the substrate (1), and depositing the at least one sample into the liquid layer (5).

## Description

The invention relates to method of and apparatus for of applying at least one sample, e.g. for imaging or diffraction experiments under cryogenic conditions, to a substrate, in particular a sample carrier, such as a film on a grid. Other examples of substrates include nanoreactors and nanofluidic devices, such as nanocapillary array membranes. Samples include (single) particles, e.g. macromolecular compounds, e.g. proteins, viruses, cells, bacteria, nanoparticles, and crystals, for imaging, e.g. in a cryo-electron microscope (EM), or diffraction experiments, e.g. inspection by ionizing radiation, under cryogenic conditions.

T. Jain et al. "Spotiton: a prototype for an integrated inkjet dispense and vitrification system for cryo-TEM.", J Struct Biol. 2012 Jul; 179(1) : 68-75, relates to method for EM specimen preparation based on small volume (picoliter to nanoliter) dispensing using inkjet technology. A piezo-electric inkjet dispenser is integrated with optical real-time cameras (100 Hz frame rate) to analyze picoliter to nanoliter droplet profiles in-flight and spreading dynamics on the grid, and thus provides a method to optimize timing of the process.

WO 2013/109405, WO 2013/109406 and US2014360286 disclose methods for preparing an electron microscopy sample on an EM sample grid, comprising: dispensing a plurality of discrete specimens onto an EM sample grid in an ordered array of specimen locations, each specimen of the plurality of discrete specimens being placed into an individual specimen location in the array of locations.

As explained in S. Arnold et al. "Blotting-free and lossless cryo-electron microscopy grid preparation from nanoliter-sized protein samples and single-cell extracts", Journal of Structural Biology, Volume 197, Issue 3, March 2017, Pages 220-226, transmission electron microscopy (TEM) of vitrified specimens has become a powerful technique for the high-resolution structural analysis of biological matter, and is increasingly recognized as a mainstream tool in biology.

Cryogenic sample-grid (cryo-EM grid) preparation and imaging methods ensure that biological specimens withstand the vacuum inside electron microscopes, allow their investigation while trapped at physiological conditions that conserve the structural arrangement of the biomolecules and reduce the effect of radiation damage. Arnold continues: these preparation methods have not improved significantly over the last 20 years and have some major drawbacks: a 2-4 µL sample volume is required, and 99.9% of the sample volume is lost during grid preparation, due to an extensive blotting step made with filter paper. Furthermore, blotting with filter paper can lead to protein aggregation or denaturation. The current state of the art sample preparation methods are recognized as one of the most significant limitations in cryo-EM.

Arnold relates to a method for cryo-electron microscopy (cryo-EM) that requires only 3-20 nL of sample to prepare a cryo-EM grid, depending on the protocol used. The sample is applied and spread on the grid by a microcapillary. This method is also described in WO 2017/005297.

It is an object of the present invention to provide an improved method of and apparatus for a applying a sample to a substrate, in particular by further reducing the amount of sample and/or improving reproducibility.

To this end, the method comprises the steps of applying, in one or more steps, a liquid to the substrate thus forming a liquid layer on the substrate, and depositing the at least one sample into the liquid layer.

In an embodiment, the liquid layer is applied to the substrate by means of spraying or jetting droplets of the liquid onto the substrate or contacting the substrate with liquid adhered to or in an applicator, such as a pin, capillary, pipette.

In another embodiment, after the liquid layer has been applied to the substrate, superfluous liquid is removed to make the layer thinner.

In a refinement, superfluous liquid is removed by evaporation, absorption, e.g. blotting, or suction. These technologies are proven and suitable to remove excess liquid to provide a thinner film of sample. They were found to work equally well to provide a liquid layer suitable to be seeded.

Many samples are stabilized in a solution containing ingredients such as buffers, salts and/or additives. These solutions, often referred to as control solution or buffer solution, are inexpensive and can be made identical or essentially identical to the solution that contains the actual sample, such as biomolecules, fibres, viruses, et cetera. By first applying a thin layer of liquid, e.g. control solution, without the actual sample, onto a substrate, such as an EM grid, and then seeding the liquid layer with sample, e.g. in the form extremely small droplets, the wasting of sample is significantly reduced or avoided altogether.

In an embodiment, the sample contains (single) particles, such as macromolecular compounds and complexes thereof, e.g. proteins, viruses, cells, bacteria, nanoparticles, and crystals, dissolved and/or suspended in a control solution, which solution preferably contains one or more buffers, such as Hepes (4-(2-hydroxyethyl)-1-piperazineethanesulfonic acid), Tris (tris(hydroxymethyl)aminomethane), MIB (Sodium malonate dibasic monohydrate, Imidazole, Boric acid), contains salts, such as NaCl, and/or contains additives, such as Tween®, EDTA (Ethylenediaminetetraacetic acid), BME (β-mercaptoethanol), and the liquid consists essentially of the control solution.

In another embodiment, two or more liquids are applied to the substrate, e.g. to superpose two or more layers and/or juxtapose sections of a layer. Thus, two or more different liquids and/or samples, e.g. different substances and/or different concentrations of the same substance, can be applied to the substrate. In an embodiment, a layer with multiple sections is applied to the substrate, each with a different liquid, such that differences in pH, salt concentrations, or differences in ligands such as ATP, ADP and non-hydrolysable analogous of ATP, could be screened.

In an embodiment, the total volume of sample(s) deposited into the liquid layer is smaller than the total volume of the liquid layer, preferably at least 50% smaller. In another embodiment, the resulting layer, after deposition of the sample(s) had a thickness smaller than 1 µm, preferably smaller than 200nm, preferably smaller than 100nm. In another embodiment, the at least one sample is deposited in the form of particles or droplets having an average diameter smaller than 30 µm, preferably smaller than 20 µm, preferably smaller than 10 µm, preferably smaller than 5 µm, preferably smaller than 1 µm.

In another embodiment, droplets of the at least one sample are deposited in the liquid by means of electro-spraying. In a refinement, the droplets are sprayed in a direction running past the substrate, e.g. at an angle, preferably between 80 and 110 degrees, and the smaller droplets in the spray are redirected towards the substrate, e.g. by an opposite electrical charge of the droplets and the substrate.

For certain samples, in particular those that are sensitive to forces exerted during impact, the droplets are decelerated after spraying and before the droplets reach the liquid layer.

In another embodiment, the substrate is exposed to a plasma, before applying the sample to the substrate. The plasma will (glow) discharge the substrate rendering it hydrophilic, which in turn facilitates a substantially even application of the sample to the substrate. Instead of or in addition to (glow) discharge, the plasma cleans the substrate. It is preferred that the substrate is subjected to a plasma just prior to applying the sample to the substrate, e.g. less than 15 minutes, preferably less than 5 minutes before applying the sample to the substrate.

In another embodiment, at least prior to and preferably also during and after application of the liquid to the substrate, the temperature of the substrate is adjusted to a temperature around, at or above the dew point of the gas surrounding the substrate, preferably to one or more tenths of a degree, e.g. in a range from 0,1 to 1,0 degrees, below or above the dew point temperature of the gas surrounding the substrate. In an example, the dew point temperature is calculated from temperature and humidity measurements of the gas surrounding the substrate. The temperature of the substrate is measured as well. These measurements are used in a closed feedback loop to control e.g. a Peltier element that thermally contacts the substrate. Thus, exchange of water, in particular evaporation, between the liquid and the surrounding gas is suppressed or, ideally, prevented and reproducibility is enhanced.

In a further embodiment, one or more of the above steps, preferably all steps are carried out in a closed chamber, preferably providing controlled temperature and humidity.

In an embodiment, after deposition of the at least one sample on or in the liquid layer, the at least one sample and the liquid are vitrified. In a refinement, components in the sample are allowed, during a defined time interval, to mature of react before vitrification. In another refinement, sample is deposited in the liquid layer while the substrate moves, e.g. just prior to vitrification.

The invention further relates to an apparatus for applying liquid, in particular one or more samples, to a substrate comprising: a substrate holder, at least one reservoir for a liquid, at least one reservoir for a sample, an applicator for applying, in one or more steps, the liquid to the substrate, a dispenser for the at least one sample, and a controller configured to drive the applicator to form at least one liquid layer on the substrate and to drive the dispenser to deposit the at least one sample into the liquid layer.

In an embodiment, the apparatus comprises a generator for applying a (high) DC voltage difference between the substrate on the one hand and the dispenser on the other.

Typically, the controller comprises a processor and a memory and is configured, e.g. programmed, to receive data on the positions of the substrate and the dispenser and the temperature and humidity of the surrounding gas, to process such data, and to operate one or more drivers, e.g. stepper motors, that move the substrate and/or the applicator surface, and one or more cooling and/or heating elements. In general, the controller may be implemented in the form of any system including a processor and a memory that is capable of performing the functions described in this specification. Further, the controller may be coupled to one or more input/output (I/O) devices. Examples of input devices may include, but are not limited to, one or more camera's and/or sensors, one or more buttons, a (small) keyboard, touchscreen, or the like. Examples of output devices may include, but are not limited to, a monitor or a display, speakers, or the like. Input and/or output devices may be coupled to the data processing system either directly or through intervening I/O controllers.

The invention will now be explained in more detail with reference to the Figures, which show an embodiment of the present invention.
Figures 1A, 1B, and 1C illustrate the configuration of an EM grid and application of a liquid layer to that grid.
Figure 2 shows a configuration for the deposition of sample to a grid by electro-spraying.
Figures 3 and 4 show additional elements for redirection and deceleration of droplets.

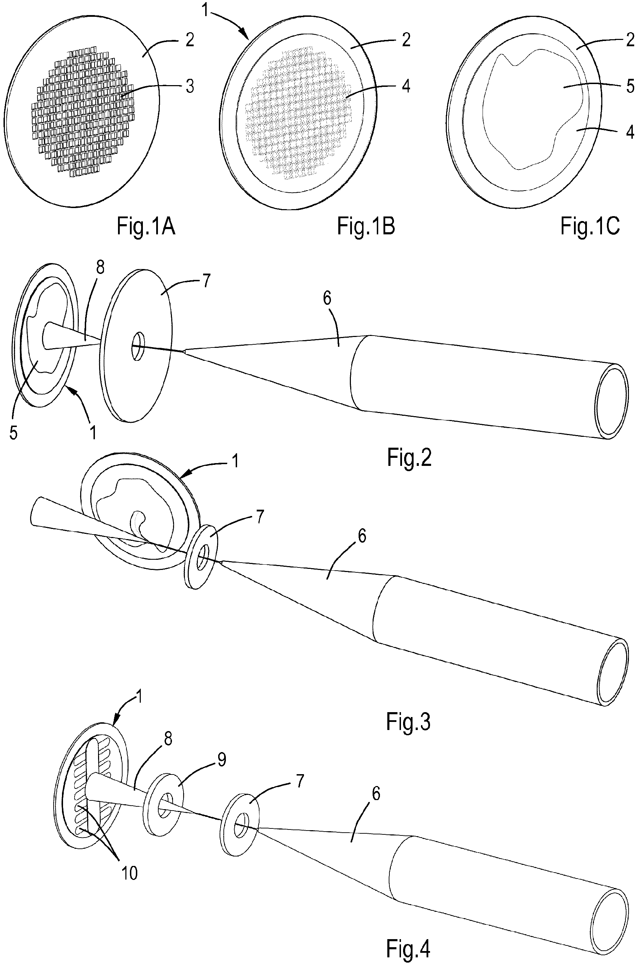

Figures 1A and 1B show an EM (Electron Microscopy) grid 1, in this example a copper disc 2 cast with a fine mesh 3 of square openings of e.g. 100 x 100 µm². A thin perforated carbon film 4 is fixed to the disc and over the mesh. The carbon was rendered hydrophilic by glow discharging. In Figure 1C, a liquid layer 5 has been applied to the EM grid, e.g. by pipetting, spraying or jetting.

Figure 2 shows a configuration for depositing a sample in the liquid layer 5 on the grid 1 by means of electro-spraying. The configuration comprises an electrically conductive, e.g. metal, capillary 6 containing an amount of the sample and in turn provided with a nozzle for dispensing the sample. An electrode 7, in this example a metal disc with a central opening, is positioned between the nozzle of the capillary 6 and the EM grid 1. When a high DC voltage difference is generated between the capillary on the one hand and the disc on the other, sample is withdrawn from the capillary and a spray 8 of ultrafine droplets of the sample is formed, travelling from the capillary towards the grid 1, thus depositing droplets of the sample onto the liquid layer 5 on the grid 1.

Figure 3 shows a configuration wherein the droplets are sprayed in a direction perpendicular to the plane of the grid 1 and a fraction of charged and relatively small droplets in the spray are drawn to the grid 1 by an electrical field.

The configuration shown ins Figure 4 illustrates two further features of the present invention.

First, the configuration comprises a further electrode 9 to decelerate the spray. I.e., the sample is withdrawn, accelerated and spread into picoliter, attoliter, or even zettaliter droplets by the first electrode 7 and the droplets are decelerated by the second electrode 9, to reduce the impact of the droplets.

Second, a number of, e.g. seven, liquids are applied to the grid 1, in juxtaposed sections 10. Each liquid has a different composition. The sample is sprayed over each section.

Suitable components an apparatus for applying liquid to a substrate, such as a holder for the substrate, a climate chamber, electrodes for generating a plasma, a visualization system, sensors, and a Peltier element, are known in the art and described in, e.g., PCT patent application PCT/EP2017/065466.

The invention is not restricted to the above-described embodiments, which can be varied in a number of ways within the scope of the claims.

## Claims

1. Method of applying at least one sample, e.g. for imaging or diffraction experiments under cryogenic conditions, to a substrate, in particular a sample carrier, such as a film on a grid, comprising the steps of
applying, in one or more steps, a liquid to the substrate thus forming a liquid layer on the substrate, and
depositing the at least one sample into the liquid layer.

2. Method according to claim 1, wherein the liquid layer is applied to the substrate by means of spraying or jetting droplets of the liquid onto the substrate or contacting the substrate with liquid adhered to or in an applicator.

3. Method according to claim 1 or 2, wherein, after the liquid layer has been applied to the substrate, superfluous liquid is removed to make the layer thinner.

4. Method according to claim 3, wherein superfluous liquid is removed by evaporation, absorption or suction.

5. Method according to any one of the preceding claims, wherein two or more liquids are applied to the substrate.

6. Method according to any one of the preceding claims, wherein the sample contains particles dissolved and/or suspended in a control solution and wherein the liquid layer consists essentially of the control solution.

7. Method according to any one of the preceding claims, wherein the total volume of sample(s) deposited into the liquid layer is smaller than the total volume of the liquid layer, preferably at least 50% smaller.

8. Method according to any one of the preceding claims, wherein droplets of the at least one sample are deposited in the liquid by means of electro-spraying.

9. Method according to claim 8, wherein the droplets are sprayed in a direction running past the substrate and the smaller droplets in the spray are redirected towards the substrate.

10. Method according to claim 8 or 9, wherein the droplets are decelerated after spraying and before the droplets reach the liquid layer.

11. Method according to any one of the preceding claims, wherein two or more different samples are applied to the substrate.

12. Method according to any one of the preceding claims, wherein, at least prior to and preferably also during and after application of the liquid matrix to the substrate, the temperature of the substrate is adjusted to a temperature around, at or above the dew point of the gas surrounding the substrate, preferably to within one or more tenths of a degree from the dew point.

13. Method according to any one of the preceding claims, wherein after deposition of the at least one sample on or in the liquid layer, the at least one sample and the liquid are vitrified.

14. Apparatus for applying liquid, in particular one or more samples, to a substrate comprising
a substrate holder,
at least one reservoir for a liquid,
at least one reservoir for a sample,
an applicator for applying, in one or more steps, the liquid to the substrate,
a dispenser for the at least one sample, and
a controller configured to drive the applicator to form at least one liquid layer on the substrate and to drive the dispenser to deposit the at least one sample into the liquid layer.

15. Apparatus according to claim 14, comprising a generator for applying a DC voltage difference between the substrate on the one hand and the dispenser on the other.
